# EUROPEAN PATENT APPLICATION

(11) **EP 1 619 655 A2**
(43) Date of publication of application: **25.01.2006**
(21) Application number: 05015545.6
(22) Date of filing: 18.07.2005
(51) Int. Cl.: G09G 3/34

(54) **Liquid crystal display device with coloured back light sources and white balance correction**

(30) Priority: 20.07.2004 JP 2004211708
(71) Applicant: ALPS ELECTRIC CO., LTD., Tokyo 145-8501 (JP)
(72) Inventor: Oizumi, Mitsuo c/o ALPS ELECTRIC CO., LTD., Ota-ku (JP); Hayashi, Yuzo c/o ALPS ELECTRIC CO., LTD., Ota-ku (JP)
(74) Representative: Klunker . Schmitt-Nilson . Hirsch

(57) **Abstract**

In a liquid crystal display device, in the vicinity of one end surface of a light guiding plate, a plurality of light sources are disposed. On a main surface of the light guiding plate facing a liquid crystal display panel, a light diffusing plate is disposed. On the light diffusing plate, the liquid crystal display panel is disposed. The liquid crystal display device includes a driving control unit that controls display of the liquid crystal display panel, a light source control unit that controls luminescence of the plurality of light sources, a synchronizing unit that synchronizes display of the liquid crystal display panel and the luminescence of the plurality of light sources, a pulse generating unit that generates pulses for driving the liquid crystal display panel or the plurality of light sources, and a correcting unit that corrects control parameters in the driving control unit and the light source control unit.

## Description

### BACKGROUND OF THE INVENTION

### 1. Field of the Invention

The present invention relates to a liquid crystal display device, and more particularly, to a liquid crystal display device using a field sequential method.

### 2. Description of the Related Art

The related art color liquid crystal display devices has a configuration in which liquid crystal cells, each serving as an optical shutter, and color filters of R, G, and B provided in respective pixels of the liquid crystal cells are combined. In this configuration, transmittance of each pixel is separately controlled so as to display an arbitrary color. In such a configuration using the color filters, however, since three subpixels of R, G, and B constitute one set, utilization efficiency of each of R, G, and B light components is low. Further, driving circuits for the subpixels three times as much as the number of pixels must be provided.

Therefore, a field sequential method has been used in which the R, G, and B color light components are selectively emitted to cause the entire surface of the liquid crystal cell to change into R, G, and B in a time-sharing manner, and luminescence is synchronized with display of the liquid crystal cell. As R, G, and B light sources, for example, light-emitting diodes (LEDs), cold-cathode tubes, or the like are used. According to this method, since the color filters do not need be provided, high luminance can be realized. At the same time, since one dot can be displayed with one pixel, high definition of about three times as large as the related art can be realized.

Japanese Unexamined Patent Application Publication No. 1-179914 is an example of the related art.

However, since the R, G, and B light sources have different luminescence efficiency, when the same current flows in the respective light sources in order to perform white display, visual white balance may be upset, and thus greenish white may be displayed. Accordingly, an observer cannot view the display with favorable white balance.

Further, in the liquid crystal display device, the value of a voltage having maximum transmittances is different in R, G, and B due to a wavelength dependency of retardation in a cell gap. For this reason, in order to keep the white balance, the transmittance must be lowered.

### SUMMARY OF THE INVENTION

The present invention has been made in consideration of the above-described problems, and it is an object of the present invention to provide a liquid crystal display device that can perform display with favorable white balance.

According to an aspect of the present invention, a liquid crystal display device includes light sources that emit a plurality of color light components, a liquid crystal display panel that performs display using light components from the light sources, a light source control unit that causes the light sources to selectively emit the light components, a driving control unit that drives the liquid crystal display panel in a time-sharing manner for every light source, a correcting unit that corrects the light source control unit and/or the driving control unit according to optical characteristics of the light sources, and a synchronizing unit that synchronizes luminescence of the light sources and display of the liquid crystal display panel.

According to this configuration, the liquid crystal display panel is driven with a corrected voltage value, such that display is performed in a state in which the respective colors have maximum transmittance. Therefore, an observer can view the display with the same visual sensitivity for the respective colors. Further, the light sources emit light in respective regions by using corrected current values, such that light is emitted with favorable white balance. Therefore, colorless white display can be performed. As a result, in a field sequential driving-type liquid crystal display device, visual sensitivity of the R, G, and B color light sources and the liquid crystal display can be enhanced, and thus color reproducibility of multi/full color can be enhanced.

In the liquid crystal display device according to the aspect of the present invention, it is preferable that the optical characteristics of the light sources are a luminance ratio of the light sources and a wavelength dependency of retardation of the liquid crystal display panel.

According to this configuration, it is possible to cope with color misalignment or color variation inherent in a light-emitting element serving as a light source.

In the liquid crystal display device according to the aspect of the present invention, it is preferable that the correcting unit corrects current values to be supplied to the light sources according to a luminance ratio of the light sources, and the light source control unit supplies the corrected current values to the light sources.

According to this configuration, since it is possible to cope with color misalignment or color variation inherent in a light-emitting element serving as a light source, white display can be performed with favorable white balance.

In the liquid crystal display device according to the aspect of the present invention, it is preferable that the correcting unit corrects a voltage to be applied to the liquid crystal display panel according to a wavelength dependency of retardation of the liquid crystal display panel, and the driving control unit applies the corrected voltage to the liquid crystal display panel.

According to this configuration, the liquid crystal display panel can be driven with maximum transmittance, and thus luminance of the liquid crystal display panel can be enhanced.

In the liquid crystal display device according to the aspect of the present invention, it is preferable that the correcting unit has a correction table for gray-scale display, and the driving control unit applies a voltage for gray-scale display to the liquid crystal display panel based on the correction table.

According to this configuration, the gray-scale display can be performed, even when the voltage value is corrected such that an observer can view the display with favorable white balance.

### BRIEF DESCRIPTION OF THE DRAWINGS

Fig. 1 is a diagram schematically showing a configuration of a liquid crystal display device according to an embodiment of the present invention;
Fig. 2 is a characteristic diagram showing luminance characteristics of light sources;
Fig. 3 is a characteristic diagram showing the relationship between a voltage and transmittance of each light source;
Fig. 4 is a diagram showing a correction table in which a gray-scale voltage of each light source; and
Fig. 5 is a diagram showing the driving timing and luminescence timing in the liquid crystal display device according to the embodiment of the present invention.

### DESCRIPTION OF THE PREFERRED EMBODIMENT

An embodiment of the present invention will now be described with reference to the accompanying drawings.

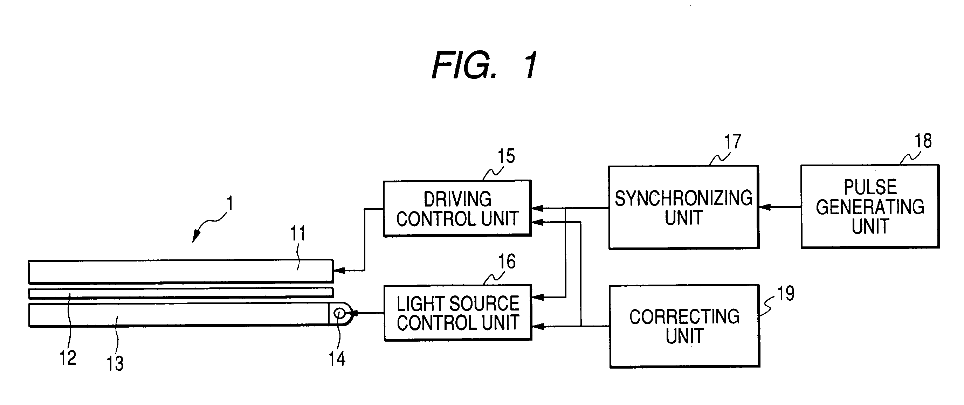

Fig. 1 is a diagram schematically showing the configuration of a liquid crystal display device according to an embodiment of the present invention. The liquid crystal display device 1 primarily includes a liquid crystal display panel 11 that performs various kinds of display, a plurality of light sources 14, a light guiding plate 13 that reflects and propagates light components from the plurality of light sources 14 to be emitted toward the liquid crystal display panel, a light diffusing plate 12 that diffuses the light components emitted from the light guiding plate 13, a driving control unit 15 that controls display on the liquid crystal display panel 11, a light source control unit 16 that controls luminescence of the plurality of light sources 14, a synchronizing unit 17 that synchronizes the display on the liquid crystal display panel 11 and the luminescence of the plurality of light sources 14, a pulse generating unit 18 that generates a pulse for driving the liquid crystal display panel 11 or the plurality of light sources 14, and a correcting unit 19 that corrects control parameters in the driving control unit 15 and the light source control unit 16.

The light guiding plate 13 is composed has a flat plate shape having a pair of main surfaces and a pair of end surfaces. On one main surface, if necessary, prisms or uneven shapes are formed so as to guide the light components from the light sources to the liquid crystal display panel. The light guiding plate 13 is made of a light-transmissive material, such as transparent plastic or glass.

In the vicinity of one end surface of the light guiding plate 13, the plurality of light sources 14 are disposed. The plurality of light sources 14 may include color light-emitting elements, such as light-emitting diodes (LEDs) or electroluminescent (EL) elements. As for the plurality of light sources 14, a color combination is used in order to represent various colors with an additive color mixture system. In the present embodiment, a combination of red (R), green (G), and blue (B) is used. The number of light sources is not particularly limited. For example, the number of light sources can be suitably changed according to the size of the light guiding plate, luminance of the light source, or the like.

On the main surface of the light guiding plate 13 facing the liquid crystal display panel, the light diffusing plate 12 is disposed. The light diffusing plate 12 is formed, for example, by roughening a surface of transparent plastic. On the main surface of the light guiding plate 13 opposite to the liquid crystal display panel, a reflecting plate (not shown) is disposed. With this reflecting plate, light emitted from the main surface of the light guiding plate 13 opposite to the liquid crystal display panel can be directed toward the liquid crystal display panel.

On the light diffusing plate 12, the liquid crystal display panel 11 is disposed. The liquid crystal display panel 11 performs display using light from the plurality of light sources 14. The liquid crystal display panel 11 includes a transmissive liquid crystal display panel or a transflective liquid crystal display panel. In addition, as a driving method, an active matrix driving method or a passive matrix driving method can be used. The liquid crystal display panel 11 has a pair of transparent substrates with a liquid crystal layer interposed therebetween. As a material for the liquid crystal layer, various liquid crystal materials can be used. For example, when the field sequential method is adopted, it is preferable that materials having a fast response speed, that is, OCB (Optically Compensated Bend) mode liquid crystal, ferroelectric liquid crystal, antiferroelectric liquid crystal, or the like is used.

Moreover, if necessary, between the light guiding plate 13 and the liquid crystal display panel 11 or on the liquid crystal display panel 11, optical members, such as a polarizing plate, a retardation plate, and the like, are disposed. Further, the light guiding plate 13 or the light diffusing plate 12 may be a film or sheet shape, not a plate shape.

For example, in the active matrix driving method using TFTs (Thin Film transistors), the driving control unit 15 primarily includes a signal control unit, a power supply, a scanning line driving circuit (a vertical driving circuit), and a data line driving circuit (a horizontal driving circuit). The signal control unit generates various signals required for performing display on the liquid crystal display panel 11 from input video signals or input synchronizing signals. The power supply generates powers generates power having various voltage values required for the driving circuits. A gate line driving circuit drives gate lines of the liquid crystal display panel 11 by signals from the signal control unit. The data line driving circuit drives data lines of the liquid crystal display panel by signals from the signal control unit. The driving control unit 15 having such a configuration drives the liquid crystal display panel 11 in a time-sharing manner for every light source 14. Moreover, the driving control unit 15 is not limited to the above-described configuration, but may be properly changed according to the driving method.

The light source control unit 16 causes the plurality of light sources 14 to selectively emit the light components. In the present embodiment, the R, G, and B color components are selectively emitted to change the entire surface of the liquid crystal display panel 11 into R, G, and B in the time-sharing manner. That is, the light source control unit 16 controls the plurality of light sources 14, such that one color image (frame) is sequentially divided into R, G, and B images (field) in a time-variant manner and the images (field) are sequentially switched so as to constitute one color image (frame).

The synchronizing unit 17 synchronizes the display on the liquid crystal display panel 11 and the luminescence of the plurality of light sources 14. When an R display region is driven, the synchronizing unit 17 turns on R pixels in the liquid crystal display panel 11 and simultaneously synchronizes the driving control unit 15 and the light source control unit 16, such that R light sources emit light.

The correcting unit 19 corrects the driving control unit 15 and/or the light source control unit 16 according to optical characteristics of the plurality of light sources 14. As the optical characteristics of the plurality of light sources 14, a luminance ratio of the plurality of light sources 14 and/or a wavelength dependency of retardation of the liquid crystal display panel 11 can be exemplified. Therefore, it is possible to cope with a color misalignment or color variation inherent in a light-emitting element (in this embodiment, referred to as LED) serving as a light source.

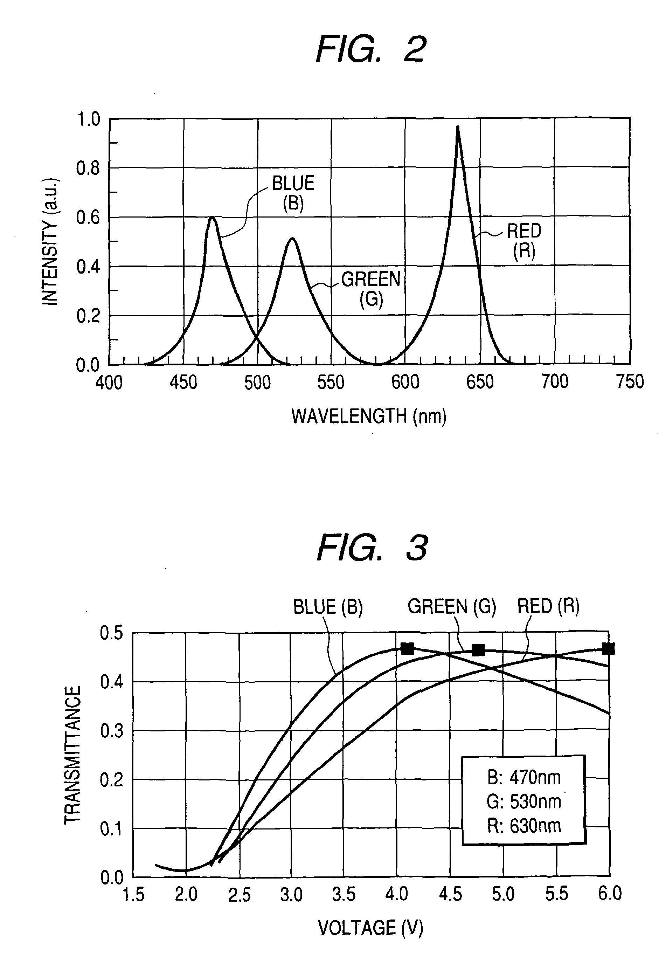

When light-emitting elements (in this embodiment, referred to as LEDs), such as LEDs or EL elements, are used as the light sources 14, the respective light sources 14 have different luminescence efficiency. For this reason, there may be a problem in that white balance is upset and colored white display is performed. That is, in order to keep the white balance, as shown in Fig. 2, preferably, R has a maximum peak transmittance, B has an intermediate peak transmittance, and G has a minimum peak transmittance. The correcting unit 19 corrects such a luminance difference between the light sources. Specifically, the correcting unit 19 corrects current values to be supplied to the light sources according to the luminance ratio of the light sources. Therefore, the color misalignment or color variation inherent in the LED can be corrected, and thus white color display can be realized with favorable white balance.

Here, the correction of the current value will be described. In a colorimetric system, B, G, and R have brightness of 2.15, 13.88, and 4.48, respectively. Therefore, the luminance (cd/m²) ratio of R, G, and B becomes B:G:R = 1:6.46:2.09. Further, when the same current value is supplied to the LEDs for respective colors, the ratio of luminosity (cd) of R, G, and B becomes B:G:R = 1:3.33:1.33. From the above-described ratios, the current value ratio between the LEDs for the respective colors becomes B:G:R = 1:1.94:1.56. Accordingly, the light sources are controlled by the current values corresponding to the current value ratio. Information of the current values corrected by the correcting unit 19 is supplied to the light source control unit 16, and the light source control unit 16 supplies the corrected current values to the respective light sources 14. Moreover, the corrected current values or the current value ratio may be stored in advance in the correcting unit 19 or in a storing unit in the liquid crystal display panel (for example, the light source control unit 16) as a correction table. In this case, the light source control unit 16 refers to the correction table and supplies the current values to the respective light sources 14.

In addition, the correcting unit 19 corrects a voltage to be applied to the liquid crystal display panel according to the wavelength dependency of retardation of the liquid crystal display panel 11. For example, in the active matrix driving method, when being driven with the same driving voltage, the respective light sources 14 have different transmittance for wavelength dispersion of retardation of the liquid crystal material, as shown in Fig. 3. That is, at the time of the voltage of 4.0 V, transmittance of R, G, and B are 0.35, 0.43, and 0.47, respectively. As such, when the respective colors have different transmittance, it is difficult for an observer to vie bright display with the favorable white balance. For this reason, the correcting unit 19 corrects the driving voltage (control parameter) (to a voltage at a main wavelength) such that the observer can view the bright display with the favorable white balance, that is, the same transmittance is obtained at the main wavelength. As apparent from Fig. 3, as regards a voltage corresponding to the main wavelength having maximum transmittance (rectangular portions in Fig. 3) (R: 630 nm, G: 530 nm, and B: 470 nm), R, G, and B have about 6.0 V, about 4.8 V, and about 4.1 V, respectively. Accordingly, for each color, the correction is performed with the voltage at the main wavelength. Therefore, the liquid crystal display panel 11 can be driven with maximum transmittance, and thus the observer can view the bright display with the favorable white balance.

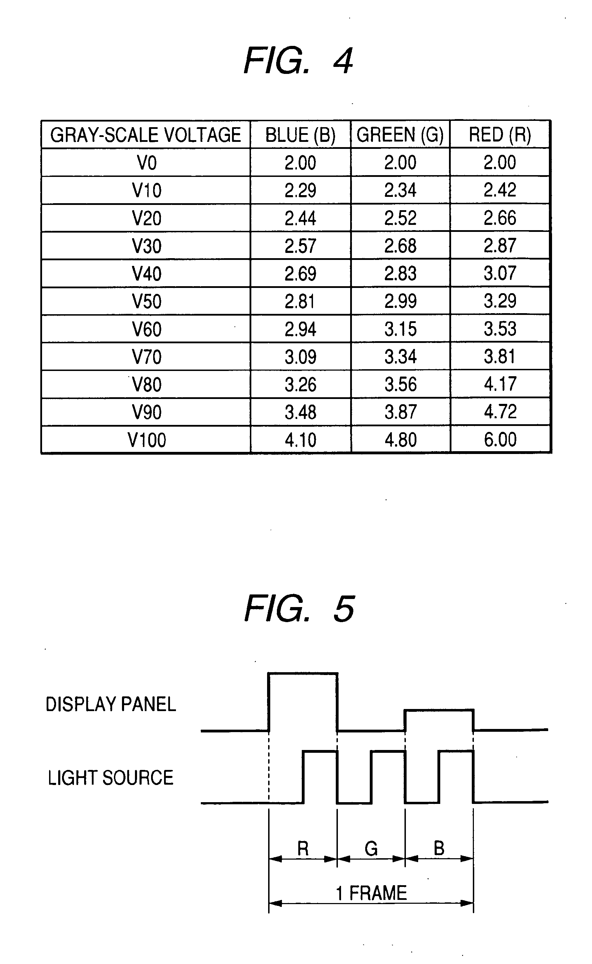

The information of the current values corrected by the correcting unit 19 is supplied to the driving control unit 15 and the driving control unit 15 applies the corrected voltage to the liquid crystal display panel 11. Further, the correcting unit 19 may have a correction table for gray-scale display shown in Fig. 4, and the driving control unit 15 may apply a voltage for gray-scale display to the liquid crystal display panel 11 based on the correction table. Accordingly, even when the voltage is corrected such that the observer can view the bright display with the favorable white balance, gray-scale display can be performed. Moreover, the corrected voltage value or the voltage ratio may be stored in advance in a storing unit in the liquid crystal display panel (for example, the driving control unit 15) as the correction table. In this case, the driving control unit 15 refers to the correction table and applies the voltage for gray-scale display to the liquid crystal display panel 11.

In the liquid crystal display device having the above-described configuration, the synchronizing unit 17 synchronizes the display on the liquid crystal display panel 11 and the luminescence of the plurality of light sources 14 based on the pulses generated by the pulse generating unit 18 at the timing shown in Fig. 5. The synchronizing unit 17 transmits control signals to the driving control unit 15 and the light source control unit 16, such that driving or luminescence is performed at the timing shown in Fig. 5.

The correcting unit 19 corrects the current values (control parameters) supplied to the light sources according to the luminance ratio of the light sources and simultaneously corrects the driving voltage (control parameter), such that the observer can view the bright display with the favorable white balance, that is, such that the same transmittance is obtained at the main wavelength. Then, the correcting unit 19 transmits the information about the corrected current values to the light source control unit 16 and transmits the information about the corrected voltage value to the driving control unit 15.

The driving control unit 15 control driving of the liquid crystal display panel 11 based on the corrected voltage value. Further, the light source control unit 16 controls luminescence of the light sources 14 based on the corrected current values. The liquid crystal display panel 11 and the light sources 14 divides one frame (60 Hz) into R, G, and B regions (180 Hz, respectively) in the time-sharing manner, as shown in Fig. 5, such that driving is synchronized with the luminescence. That is, in the R region, pixels performing R display are driven and simultaneously the R light sources emit light. Further, in the G region, pixels performing G display are driven and simultaneously the G light sources emit light. In addition, in the B region, pixels performing B display are driven and simultaneously the B light sources emit light.

Here, each light source emits light only in a second half period of each region so as to provide a dark period in the boundary of the colors. By doing so, color mixture can be prevented and thus a correct color image can be displayed. In this case, since the voltage of the G region is set to a white voltage (0 V), the voltage of the B region is set to a B voltage, and the voltage of the R region is set to an R voltage, a pulse waveform shown in Fig. 5 is obtained.

The liquid crystal display panel 11 is driven by using the corrected current values, the display is performed with maximum transmittance for each color. Therefore, the observer can view the display with the same visual sensitivity for the respective colors. Further, the light sources 14 emit light in the respective regions by using the corrected current values, and thus the luminescence is performed with the favorable white balance. Therefore, colorless white display can be performed. As a result, in the field sequential driving-type liquid crystal display device, the visual sensitivity of the R, G, and B color light sources and the liquid crystal display can be enhanced and thus color reproducibility of multi/full color can be enhanced.

The present invention is not limited to the above-described embodiment, but various changes and/or modifications can be made. For example, the numeric values or the materials described in the above-described embodiment can be suitably changed without departing from the spirit or scope of the present invention. Further, the present invention may be applied to a transmissive liquid crystal display device or a transflective liquid crystal display device, which uses a backlight or the like as a light source.

According to the present invention, the correcting unit is provided to correct the light source control unit that causes the light sources to selectively emit the light components and the driving control unit that drives the liquid crystal display panel in the time-sharing manner for every light source according to the optical characteristics of the light sources. Therefore, a liquid crystal display device that can perform display with favorable white balance can be provided.

The present inventors have paid attention to color misalignment or color variation inherent in a light-emitting element serving as a light source is removed by correcting control parameters and have found that white balance or visual sensitivity can be enhanced by correcting the control parameters such that the color misalignment or color variation of the light-emitting element is prevented from occurring. That is, according to the present invention, the correcting unit is provided to correct the light source control unit that causes the light sources to selectively emit the light components and/or the driving control unit that drives the liquid crystal display panel in the time-sharing manner for every light source according to the optical characteristics of the light sources. Therefore, a liquid crystal display device that can perform the display with favorable white balance can be provided.

## Claims

1. A liquid crystal display device comprising:
light sources that emits a plurality of color light components;
a liquid crystal display panel that performs display using light components from the light sources;
a light source control unit that causes the light sources to selectively emit the light components;
a driving control unit that drives the liquid crystal display panel in a time-sharing manner for every light source;
a correcting unit that corrects the light source control unit and/or the driving control unit according to optical characteristics of the light sources; and
a synchronizing unit that synchronizes luminescence of the light sources and display of the liquid crystal display panel.

2. The liquid crystal display device according to claim 1,
wherein the optical characteristics of the light sources is a luminance ratio of the light sources and/or a wavelength dependency of retardation of the liquid crystal display panel.

3. The liquid crystal display device according to claim 1 or 2,
wherein the correcting unit corrects current values to be supplied to the light sources according to a luminance ratio of the light sources, and the light source control unit supplies the corrected current values to the light sources.

4. The liquid crystal display device according to any of claims 1-3,
wherein the correcting unit corrects a voltage to be applied to the liquid crystal display panel according to a wavelength dependency of retardation of the liquid crystal display panel, and the driving control unit applies the corrected voltage to the liquid crystal display panel.

5. The liquid crystal display device according to any of claims 1-4,
wherein the correcting unit has a correction table for gray-scale display, and the driving control unit applies a voltage for gray-scale display to the liquid crystal display panel based on the correction table.

6. The liquid crystal display device according to any of claims 1-5,
wherein the correcting unit corrects current values to be supplied to the light sources according to a luminance ratio of respective colors of the light sources in order to keep white balance.

7. The liquid crystal display device according to claim 6,
wherein the plurality of colors of the light sources are R, G, and B, and the correcting unit corrects a ratio of current values to be supplied to the light sources to satisfy the condition B:G:R = 1:1.94:1.56 according to a luminance ratio of R, G, and B.

8. The liquid crystal display device according to any of claims 1-7,
wherein the correcting unit corrects voltage values to be supplied to the light sources according to a wavelength dependency of retardation of the liquid crystal display panel such that R, G, and B have 6.0 V, 4.8 V, and 4.1 V, respectively.
